# EUROPEAN PATENT APPLICATION

(11) **EP 3 751 047 A1**
(43) Date of publication of application: **16.12.2020**
(21) Application number: 19750987.0
(22) Date of filing: 01.02.2019
(51) Int. Cl.: D06M 15/21

(54) **TARPAULIN HAVING IMPROVED FLEXIBILITY, ADHESION, AND SURFACE STRENGTH AND MANUFACTURING METHOD THEREFOR**

(30) Priority: 07.02.2018 KR 20180015299; 21.01.2019 KR 20190007622
(71) Applicant: POLYTECH INC., Seoul 04001 (KR)
(72) Inventor: CHUNG, Eun Ha, Goyng-si Gyeonggi-do 10306 (KR); KIM, Kyoung Joong, Nonsan-si Chungcheongnam-do 32991 (KR)
(74) Representative: Viering, Jentschura & Partner mbB Patent- und Rechtsanwälte
(86) International application number: PCT/KR2019/001431
(87) International publication number: WO 2019/156447

(57) **Abstract**

The disclosed tarpaulin comprises: a fabric layer, and a resin layer bonded to at least one surface of the fabric layer. The fabric layer comprises: high-density polyethylene (HDPE) multifilament yarns; polypropylene (PP) multifilament yarns arranged to cross the HDPE multifilament yarns; and polyethylene terephthalate (PET) ground yarns binding the HDPE multifilament yarns and the PP multifilament yarns. The resin layer comprises PP and low-density polyethylene (LDPE).

## Description

### Technical Field

The present invention relates to a tarpaulin and a method for manufacturing the same, and more particularly, to the tarpaulin having improved flexibility, adhesion, and surface strength even at a low processing temperature and the method for manufacturing the same.

### Background Art

Tarpaulin is a waterproof fabric that can be used as a waterproof tent, an agricultural facility tent, a temporary tent, etc., and is widely used because it is light, flexible, and durable. These tarpaulins can be classified into a polyethylene (PE)-based tarpaulin, a PP polypropylene (PP)-based tarpaulin, and a polyvinyl chloride (PVC)-based tarpaulin, etc., depending on used raw materials.

The PE-based tarpaulin is a product formed by laminating one side or both sides of a low density polyethylene (LDPE) film on a fabric or knitted fabric of a slit yarn obtained by slitting/stretching a high density polyethylene (HDPE) film. The PE-based tarpaulin has the advantages of simple production process, economical cost, recyclability of product, and non-toxicity, but has weak durability and physical strength.

The PP-based tarpaulin is a product formed by laminating one side or both sides of a homo PP film on the fabric or knitted fabric of the silt yarn obtained by slitting/stretching the homo PP film. The PP-based tarpaulin has the advantage of high tensile strength, but has a low flexibility.

The PVC-based tarpaulin is a product formed by laminating a PVC film or impregnating a liquid PVC sol on the fabric or knitted fabric made of polyester multifilament yarn. The PVC-based tarpaulin may have the good durability, so it can be used for a long time. The PVC-based tarpaulin has the advantage of being flexible than the PE-based tarpaulin, but it cannot be recycled and incinerated due to the toxicity of the film layer. Therefore, it has a big restriction on production and use.

Recently, a lot of efforts have been made to produce the product that replaces the PVC-based tarpaulin. As a result, products for forming a waterproof layer using an olefin-based copolymer (elastomer) and a styrene-ethylene-butadiene copolymer (synthetic rubber) on the knitted fabric or fabric made of the PP multifilament are being produced. However, these products have a high flexural elasticity of homo PP, which is the basic material of the fabric, and have significantly a lower flexibility than that of a polyester fabric of PVC-based tarpaulin.

In addition, since the material (elastomer and synthetic rubber) of the waterproof layer has a low hardness, the surface hardness may be significantly lower than that of the PVC-based tarpaulin.

Here, in order to maintain the adhesive force between the PP multifilament yarn fabric and the waterproof layer, the processing temperature for forming the waterproof layer is 300°C to 330°C and such high temperature processing may lower the tensile strength of the PP multifilament yarn.

In addition, since the price of the waterproof layer material is higher than that of other tarpaulin main materials (LDPE, homo PP, PVC resin pastes), it may cause to result in a low competitiveness on price.

### Technical Problem

The present invention is to solve these problems, and to provide a tarpaulin with improved a flexibility, adhesion and surface hardness.

Another object of the present invention is to provide a method for manufacturing the tarpaulin.

### Technical Solution

Tarpaulin for achieving the above-mentioned object includes a fabric layer and a resin layer bonded to at least one surface of the fabric layer. The fabric layer may include a high density polyethylene (HDPE) multifilament yarn, a polypropylene (PP) multifilament yarn arranged to intersect with the HDPE multifilament yarn, and a polyethylene terephthalate (PET) ground yarn binding the HDPE multifilament yarn and the PP multifilament yarn. The resin layer may include the PP and a low density polyethylene (LDPE).

In an embodiment of the present invention, wherein a thickness of the HDPE multifilament yarn may be 200 denier to 3,000 denier, a thickness of the PP multifilament yarn may be 200 denier to 3,000 denier, and a thickness of the PET ground yarn may be 30 denier to 150 denier.

In an embodiment of the present invention, wherein the resin layer may include 30% to 70% by weight of the LDPE and 70% to 30% by weight of the PP.

In an embodiment of the present invention, wherein the resin layer may include 30% to 50% by weight of the LDPE, 30% to 50% by weight of the PP, and 10% to 20% by weight of an olefin-based copolymer.

In an embodiment of the present invention, wherein the olefin-based copolymer may be a copolymer of monomer mixture comprising 15% to 20% by weight of an ethylene monomer and 80% to 85% by weight of a propylene monomer.

In an embodiment of the present invention, wherein a melt index of the LDPE may be 5g/10min to 20g/10min, a melt index of the PP may be 15g/10min to 35g/10min, and a melt index of the olefin-based copolymer may be 7g/10min to 12g/10min.

A method of manufacturing tarpaulin according to an embodiment of the present invention may comprising: kneading and melting a resin raw material mixture including a polypropylene (PP) and a low density polyethylene (LDPE) in a cylinder including a screw; providing the molten resin raw material mixture to a T-die in a constant amount; forming a resin film by passing the molten resin raw material mixture through the T-die, and bonding the raw material layer and the resin film. The fabric layer may include a high density polyethylene (HDPE) multifilament yarn, a polypropylene (PP) multifilament yarn arranged to intersect with the HDPE multifilament yarn, and a polyethylene terephthalate (PET) ground yarn binding the HDPE multifilament yarn and the PP multifilament yarn. The step of kneading the resin raw material mixture, the step of providing the molten resin raw material mixture to the T-die and the step of forming the resin film may be performed at 260°C or lower.

### Advantageous Effects

According to the present invention, instead of the expensive olefin-based copolymer, the LDPE and the PP are used as main materials for the resin layer. It may improve the flexibility, surface strength and crack resistance of tarpaulin while compared to the conventional polyolefin-based tarpaulin. In addition, in the conventional polyolefin-based tarpaulin, the high temperature of 300° C or higher may be required to bond the resin layer and the fabric layer, and the separation/peeling may occur due to the decrease in adhesive strength when bonding at a low temperature. Since the resin material used in the present invention can be bonded to the fabric layer at a lower temperature (temperature difference of 45° C or higher) than the conventional resin material and the PP multifilament yarn of the fabric layer can be melted at high temperature processing, the tensile strength of and the tear strength of the final product are prevented from lowering.

### Brief Description of the Drawings

FIG.1 is a cross-sectional view showing a tarpaulin according to an embodiment of the present invention.
FIG. 2 and 3 are perspective views showing an enlarged fabric layer of tarpaulin according to an embodiment of the present invention.
FIG. 4 is a cross-sectional view showing a method of manufacturing tarpaulin and a device used therein according to an embodiment of the present invention.
FIG. 5 is a view showing a temperature gradient of T-die in a method of manufacturing tarpaulin according to an embodiment of the present invention.

### Detailed Description of the Embodiments

In the present application, terms such as a first and a second may be used to describe various components, but the components should not be limited by the terms. The terms are used only for the purpose of distinguishing one component from other components. For example, a first component may be referred to as a second component without departing from the scope of the present invention, and similarly, the second component may be referred to as the first component.

Terms used in the present application are only used to describe specific embodiments, and are not intended to limit the present invention. Singular expression includes plural expressions unless the context clearly indicates otherwise. In this application, terms such as "include" or "have" are intended to indicate that a feature, number, step, operation, component, part, or combination thereof described on the specification exists. It should be understood that this does not preclude the existence or addition possibility of one or more other features or numbers, steps, actions, components, parts or combinations thereof.

### Tarpaulin

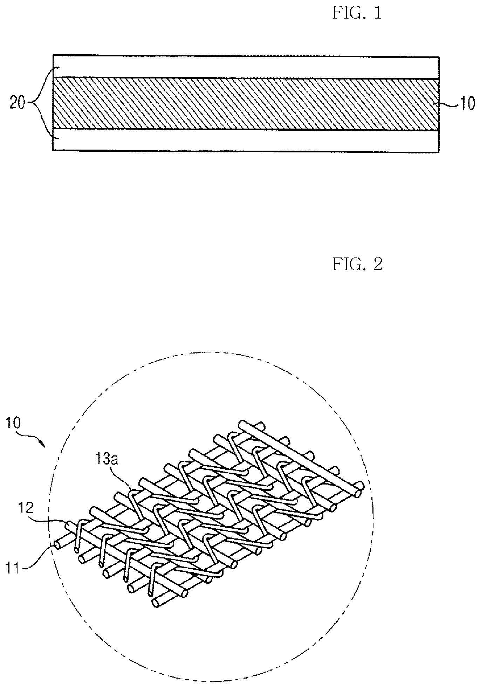

FIG. 1 may be a cross-sectional view showing a tarpaulin according to an embodiment of the present invention.

Tarpaulin according to an embodiment of the present invention may include a fabric layer 10 and a resin layer 20. The fabric layer 10 may be a fabric or knitted fabric. The resin layer 20 may be bonded to both sides or one side of the fabric layer 10.

The fabric layer 10 may include a polyethylene (PE) multifilament yarn, a polypropylene (PP) multifilament yarn, and a polyethylene terephthalate (PET) ground yarn. Preferably, the PE multifilament is a high-density polyethylene (HDPE) multifilament yarn. The HDPE multifilament yarn and the PP multifilament yarn may be a warp yarn and a weft yarn or a weft yarn and a warp yarn, respectively. The PET ground yarn may serve as an anchor binding the warp yarn and the weft yarn. Hereinafter, the classification of high-density polyethylene (HDPE) and low-density polyethylene (LDPE) may be in accordance with commonly known standards.

Preferably, a thickness of the HDPE multifilament yarn may be 200 denier to 3,000 denier, a thickness of the PP multifilament yarn may be 200 denier to 3,000 denier, and a thickness of the PET ground yarn may be 30 denier to 150 denier.

When the thickness of the HDPE multifilament yarn is less than 200 denier, the fabric layer 10 may be melted and adhere to the resin layer 20 in the process of forming the resin layer 20 on the fabric layer 10. In this case, the strength of the fabric layer 10 may be significantly reduced. In addition, when the thickness of the HDPE multifilament yarn exceeds 3,000 denier, it is difficult to weave the fabric layer 10 and laminate the resin layer 20 because the thickness of the fabric layer 10 may be excessively increased.

When the thickness of the PP multifilament yarn is less than 200 denier, the fabric layer 10 may be melted and adhere to the resin layer 20 in the process of forming the resin layer 20 on the fabric layer 10. In this case, the strength of the fabric layer 10 may be significantly reduced. In addition, when the thickness of the PP multifilament yarn exceeds 3,000 denier, it is difficult to weave the fabric layer 10 and laminate the resin layer 20 because the thickness of the fabric layer 10 may be excessively increased.

The PET ground yarn may greatly improve the production efficiency by significantly reducing the yarn cutting during production of the fabric layer 10 compared to the conventional PP ground yarn. In addition, the PP ground yarn may have a low melting point and melt in the process of forming the resin layer 20, so that it may not be firmly bind the warp and the weft yarn. Thereby, the strength (tearing strength) of the fabric may be reduced.

When the thickness of the PET ground yarn is less than 30 denier, the yarn cutting phenomenon may be significantly increased during production of the fabric layer 10. In addition, when the thickness of the PET ground yarn is greater than 150 denier, the ground yarn may protrude through the resin layer 20 after lamination of the resin layer 20, thereby significantly reducing the waterproof effect.

According to an embodiment of the present invention, the resin layer 20 may include a LDPE and a PP. For example, the resin layer 20 may include 30% to 70% by weight of the LDPE and 70% to 30 % by weight of the PP. The PP may include a homo PP or a random PP.

According to another embodiment of the present invention, the resin layer 20 may include the LDPE, the PP and an olefin-based copolymer. For example, the resin layer 20 may include 10% to 70% by weight of the LDPE, 10% to 70% by weight of the PP, and 10% to 70% by weight of the olefin-based copolymer. Preferably, the resin layer 20 may include 30% to 50% by weight of the LDPE, 30% to 50% by weight of the PP, and 10% to 20% by weight of the olefin-based copolymer.

When a resin mixture (kneaded material) for forming the resin layer 20 may further include the olefin-based copolymer, the uniformity of the melt may increase, and the neck-in phenomenon which is decreased the resin film width may be prevented when the melt passes through the T-die, and the numerical stability of the film may be improved. When the content of the olefin-based copolymer is less than 10% by weight, it is difficult to expect the above effect, and when the content of the olefin-based copolymer is excessive, a surface hardness may be lowered and a production cost may be unnecessarily increased. According to one embodiment, the olefin-based copolymer may be a copolymer of monomer mixture comprising 15% to 20% by weight of an ethylene monomer and 80% to 85% by weight of a propylene monomer.

According to one embodiment, a melt index of the LDPE of the resin layer 20 may be preferably 5g/10min to 20g/10min. When a melt index of the LDPE is lower than 5 g/10 min, the melt kneading with other raw materials may be impeded, and the resin film may crack or drop irregularly at the T-die. In addition, when the melt index of the LDPE exceeds 20 g/10 min, the neck-in phenomenon may greatly increase at the T-die.

According to one embodiment, the melt index of the PP of the resin layer 20 may be preferably 15g/10min to 35g/10min. When the melt index of the PP is lower than 15 g/10 min, the melt kneading with other raw materials may be impeded, and the resin film may crack or drop irregularly at the T-die. In addition, when the melt index of the PP exceeds 35 g/10 min, the neck-in phenomenon may be greatly increased at the T-die. More preferably, the melt index of the PP may be 20g/10min to 30g/10min.

According to one embodiment, the melt index of the resin mixture for forming the resin layer 20 may be 5g/10min to 15g/10min. When the melt index of the resin mixture is lower than 5 g/10 min, the productivity of the extrusion coating may decrease, and excessive pressure may be applied to the cylinder and the T-die, so the process is difficult to proceed. In addition, when the melt index of the resin mixture is greater than 15 g/10 min, the neck-in phenomenon may be occurred.

Preferably, the melt index of the resin mixture may be 8g/10min to 12g/10min. To obtain the melt index in the above range, the melt index of the olefin-based copolymer may be 7g/10min to 12g/10min, and the melt index of the LDPE and PP mixture may be preferably 6g/10min to 15g/10min.

The resin mixture may further include an additive in addition to the described raw material. For example, additives such as fillers, colorants, ultraviolet stabilizers, flame retardants, and antistatic agents may be added according to the purpose and use of the product.

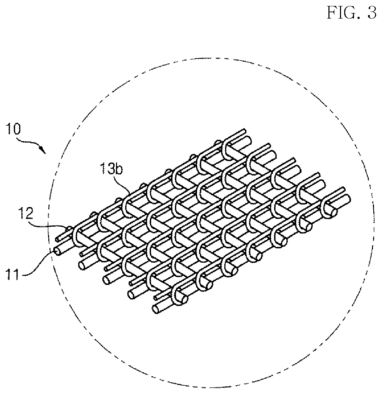

FIG. 2 and 3 are perspective views showing an enlarged fabric layer of tarpaulin according to an embodiment of the present invention.

Referring to FIG. 2, the fabric layer 10 may include a warp yarn 11, a weft yarn 12, and a ground yarn 13a. Any one of the warp yarn 11 and the weft yarn 12 may be the HDPE multifilament yarn, and the other may be the PP multifilament yarn. The ground yarn 13a may be the PET yarn.

For example, the weft yarn 12 may be disposed on the warp 11, the ground yarn 13a may have a Z arrangement structure twisted along the warp yarn 11 across the intersection of the warp yarn 11 and the weft yarn 12.

Referring to Figure 3, the weft yarn 12 may be disposed on the warp yarn 11. The ground yarn 13b may extend in the same direction as the warp yarn 11 and have an I arrangement structure twisted at an intersection of the warp yarn 11 and the weft yarn 12.

The structures of the fabric layers shown in FIGS. 2 and 3 are exemplary, and the present invention may be not limited thereto, and may have various structures known to be applicable to tarpaulin.

### Method of manufacturing tarpaulin

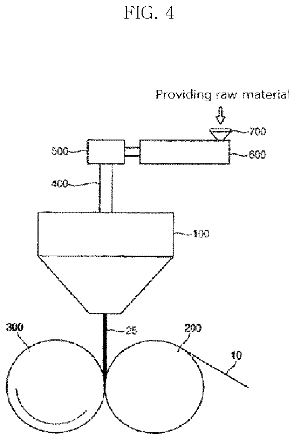

FIG. 4 is a cross-sectional view showing a method of manufacturing tarpaulin and a device used therein according to an embodiment of the present invention.

Referring to FIG. 4, the method of manufacturing tarpaulin according to an embodiment of the present invention may include a step of bonding the resin layer 20 to the fabric layer 10, and a resin coating device may be used for this.

First, through a hopper 700 of the resin coating device, raw materials for the resin layer such as the LDPE, the PP and the olefin copolymer may be provided. The raw materials for the resin layer may be supplied to a cylinder 600. The heat applied to the cylinder 600 and the rotational and linear motions of screws inside the cylinder 600 may be melt-mixed the raw materials for the resin layer.

According to one embodiment, the resin layer raw material may include the LDPE and PP. For example, the resin layer raw material may include 30% to 70% by weight of the LDPE and 70% to 30% by weight of the PP. The PP may include the homo PP or the random PP.

According to another embodiment of the present invention, the resin layer raw material may include the LDPE, the PP and the olefin-based copolymer. For example, the resin layer raw material may include 10% to 70% by weight of the LDPE, 10% to 70% by weight of the PP, and 10% to 70% by weight of the olefin-based copolymer. Preferably, the resin layer raw material may include 30% to 50% by weight of the LDPE, 30% to 50% by weight of the PP, and 10% to 20% by weight of the olefin-based copolymer.

Since the resin layer raw material may be the same as previously described, a detailed description will be omitted.

The molten resin mixture may be provided as an adapter 500, and the adapter 500 may provide the molten resin mixture to the T-die 100 in a constant amount. A screen 400 may be disposed between the adapter 500 and the T-die 100, and foreign matter and the like may be removed in the process of passing the molten resin mixture through the screen 400.

The T-die 100 may form a resin film 25 from the molten resin mixture. A transport roller 200 and a pressure roller 300 may be disposed under the T-die 100. The transfer roller 200 may transfer the fabric layer 10 and the resin film 25 may be coupled to one surface of the fabric layer 10 by the pressure of a pressure roller 300. For example, the transfer roller 200 may be a rubber roller by the pressure of the pressing roller 300, and the pressure roller 300 may be an emboss roller.

A resin layer may be further formed on the other surface of the fabric layer by using the resin coating device or another coating device having the same configuration.

In the resin coating device, the heat may be applied to the cylinder 600, the adapter 500, the screen 400, and the T-die 100 to have an appropriate process temperature.

According to one embodiment, the temperature of the cylinder 600 may be 90°C to 260°C, the temperature of the adapter 500 may be 230°C to 260°C, the temperature of the screen 400 may be 225°C to 255°C. Preferably, the temperature of the cylinder 600 may be 90°C to 245°C, the temperature of the adapter 500 may be 230°C to 245°C, the temperature of the screen 400 may be 225°C to 240°C.

The temperature of the cylinder 600 may vary depending on the location. For example, the temperature of the cylinder 600 may be relatively low in an area close to the hopper 700, and may gradually increase as it approaches the adapter 500.

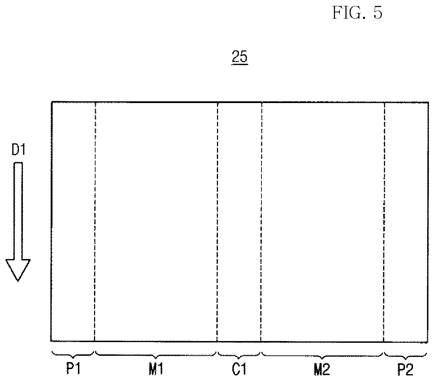

FIG. 5 may be a view showing a temperature gradient of the T-die in a method of manufacturing tarpaulin according to an embodiment of the present invention.

The temperature of the T-die 100 may vary depending on the region. For example, the temperature of the T-die 100 may vary along a direction perpendicular to the direction D1 in which the resin film 25 is discharged.

For example, the film forming portion of the T-die 100 may include a first peripheral region (P1) spaced apart from a central region C1, a second peripheral area P2 spaced apart from the central area C1 in a direction opposite to the first peripheral area P1, a first intermediate region M1 disposed between the central region C1 and the first peripheral region P1, and a second intermediate region M2 disposed between the central region C1 and the second peripheral region P2.

According to an embodiment, the central region C1, the first peripheral region P1, and the second peripheral region P2 may be heated to a first temperature, and the first intermediate region M1, and the second intermediate region M2 may be heated to a second temperature higher than the first temperature.

For example, the first temperature may be 220°C to 240°C, and the second temperature may be 230°C to 250°C.

According to an embodiment of the present invention, it is possible to improve the smoothness of the resin layer through the temperature distribution of the T-die 100 as described above.

According to the present invention, instead of the expensive olefin-based copolymer, the LDPE and the PP are used as main materials for the resin layer. It may improve the flexibility, surface strength and crack resistance of tarpaulin while compared to the conventional polyolefin-based tarpaulin. In addition, in the conventional polyolefin-based tarpaulin, the high temperature of 300° C or higher may be required to bond the resin layer and the fabric layer, and the separation/peeling may occur due to the decrease in adhesive strength during bonding at a low temperature. Since the resin material used in the present invention can be bonded to the fabric layer at a lower temperature (temperature difference of 45° C or higher) than the conventional resin material and the PP multifilament yarn of the fabric layer can be melted at high temperature processing, the tensile strength of and the tear strength of the final product are prevented from lowering.

Hereinafter, the tarpaulin according to an embodiment of the present invention and the effect of the present invention through the performance experiment of a comparative example will be described.

### Experimental Example 1

The HDPE multifilament yarn and the PP multifilament yarn were used as the warp and the weft yarn, the resin layer (0.12 mm thick) was formed on both sides of the fabric (0.48 mm thick, XTE350, Polytech IND) woven using PET yarn as the ground yarn, by using the resin coating device of FIG. 4.

The resin raw material for forming the resin layer was mixed with 40% by weight of the LDPE(LDPE 963, Hanwha Petrochemical), 45% by weight of the homo PP (4017M, Daehan Emulsion) and 15% by weight of the olefin-based copolymer (CA207A, Lyondell Basell) and heated / extruded / laminated according to the temperature conditions of Table 1 and Table 2 below. In Table 1, #1 is an area close to the hopper, and #6 is an area close to the adapter. In Table 2, #1 and #9 are outermost regions, #5 is a central region, and #2, #3, #6, and #7 are intermediate regions between the outermost regions and the central region.

**Table 1**

| Part | Temperature(°C) |
|---|---|
| Cylinder #1 | 90∼100 |
| Cylinder #2 | 110∼130 |
| Cylinder #3 | 140∼160 |
| Cylinder #4 | 170∼200 |
| Cylinder #5 | 190∼220 |
| Cylinder #6 | 200∼240 |
| Adapter | 240 |
| Screen | 235 |

**Table 2**

| Part | Temperature(°C) |
|---|---|
| T-die #1 | 230 |
| T-die #2 | 240 |
| T-die #3 | 240 |
| T-die #4 | 235 |
| T-die #5 | 230 |
| T-die #6 | 235 |
| T-die #7 | 240 |
| T-die #8 | 240 |
| T-die #9 | 230 |

As the comparative example, an estimation result for a tear strength (ASTM D751-06: Trapezoid method), abrasion resistance (surface hardness, ASTM D3884: Taber method) and adhesion (visual observation after separating the fabric layer-resin layer) of the tarpaulin specimen of experimental example 1 and the tarpaulin specimen with the resin layer consisting of the ethylene-propylene olefin-based copolymer and the styrene-ethylene-butadiene copolymer on the PP multifilament fabric layer are shown in Table 3 below.

**Table 3**

| | Tear strength(N) | | abrasion resistance(cycle) | adhesion |
|---|---|---|---|---|
| Experimental Example 1 | warp yarn direction | 301.5 | 180 | high |
| | weft yarn direction | 282.8 | | |
| Comparative Example 1 | Warp yarn direction | 209.5 | 25 | low |
| | Weft yarn direction | 215.1 | | |

Referring to Table 3, it may be seen that the tarpaulin manufactured according to the present invention has superior the tear strength, the abrasion resistance, and the adhesion compared to the conventional olefin-based tarpaulin.

Although described with reference to exemplary embodiments of the present invention as described above, those skilled in the art may vary the present invention within the scope not departing from the spirit and scope of the present invention as set forth in the claims below. You can understand that it can be modified and changed.

### INDUSTRIAL APPLICABILITY

The present invention can be used for waterproof tents, agricultural facility tents, temporary tents, and the like.

## Claims

1. A tarpaulin comprising:
a fabric layer including a high density polyethylene (HDPE) multifilament yarn, a polypropylene (PP) multifilament yarn arranged to cross the HDPE multifilament yarn, and a polyethylene terephthalate (PET) ground yarn binding the HDPE multifilament yarn and the PP multifilament; and
a resin layer bonded to at least one surface of the fabric layer;
wherein the resin layer includes the PP and a low density polyethylene (LDPE).

2. The tarpaulin of claim 1, wherein a thickness of the HDPE multifilament yarn is 200 denier to 3,000 denier, a thickness of the PP multifilament yarn is 200 denier to 3,000 denier, and a thickness of the PET ground yarn is 30 denier to 150 denier.

3. The tarpaulin of claim 1, wherein the resin layer includes 30% to 70% by weight of the LDPE and 70% to 30% by weight of the PP.

4. The tarpaulin of claim 1, wherein the resin layer includes 30% to 50% by weight of the LDPE, 30% to 50% by weight of the PP, and 10% to 20% by weight of an olefin-based copolymer.

5. The tarpaulin of claim 4, wherein the olefin-based copolymer is a copolymer of monomer mixture containing 15% to 20% by weight of a ethylene monomer and 80% to 85% by weight of a propylene monomer.

6. The tarpaulin of claim 4, wherein a melt index of the LDPE is 5g/10min to 20g/10min, a melt index of the PP is 15g/10min to 35g/10min, and a melt index of the olefin-based copolymer is 7g/10min to 12g/10min.

7. A method of manufacturing a tarpaulin:
kneading and melting a resin raw material mixture containing a polypropylene (PP) and a low density polyethylene (LDPE) in a cylinder including a screw;
providing the molten resin raw material mixture to a T-die in a constant amount;
forming a resin film by passing the molten resin raw material mixture through the T-die; and
bonding a fabric layer including a high density polyethylene (HDPE) multifilament yarn, a PP multifilament yarn arranged to cross the HDPE multifilament yarn, and a polyethylene terephthalate (PET) ground yarn binding the HDPE multifilament yarn and the PP multifilament yarn and the resin film;
the step of kneading the resin raw material mixture, the step of providing the molten resin raw material mixture to the T-die and the step of forming the resin film are performed at 260°C or lower.

8. The method of claim 7, wherein the resin layer includes 30% to 70% by weight of the LDPE and 70% to 30% by weight of the PP.

9. The method of claim 7, wherein the resin layer includes 30% to 50% by weight of the LDPE, 30% to 50% by weight of the PP, and 10% to 20% by weight of an olefin-based copolymer.

10. The method of claim 9, wherein the olefin-based copolymer is a copolymer of a monomer mixture containing 15% to 20% by weight of a ethylene monomer and 80% to 85% by weight of a propylene monomer.

11. The method of claim 9, wherein a melt index of the LDPE is 5g/10min to 20g/10min, a melt index of the PP is 15g/10min to 35g/10min, and a melt index of the olefin-based copolymer is 7g/10min to 12g/10min, and a melt index of the mixed resin raw material mixture is 8g/10 min to 12g/10 min.
